# EUROPÄISCHE PATENTSCHRIFT

(11) **EP 1 408 319 B1**
(45) Veröffentlichungstag und Bekanntmachung des Hinweises auf die Patenterteilung: **01.03.2006**
(21) Anmeldenummer: 02024085.9
(22) Anmeldetag: 29.10.2002
(51) Int. Cl.: G01N 1/28

(54) **Verfahren zur Aufbereitung von durch Biopsie entnommener Schleimhautteilchen für die zytologische Diagnostik**
Process for the preparation of particles of the mucous membrane taken by biopsy cytological diagnostics
Procédé pour la préparation de particules demuqueuses prélevés par biopsie pour lediagnostic cytological diagnostics

(30) Priorität: 06.09.2002 DE 10241254
(43) Veröffentlichungstag der Anmeldung: 14.04.2004
(73) Patentinhaber: Bach, Gerd, Dr. med., 76199 Karlsruhe (DE)
(72) Erfinder: Bach, Gerd, Dr. med., 76199 Karlsruhe (DE)

(56) Entgegenhaltungen:
- EP-A- 0 740 142
- EP-A- 1 067 374
- DE-A- 19 543 252

## Beschreibung

Die Erfindung betrifft ein Verfahren zur Aufbereitung von durch Biopsie entnommener Schleimhautteilchen für die zytologische Diagnostik, bei dem ein von der Schleimhaut entferntes Schleimhautteilchen auf einen Objektträger übertragen und mit einer Nadel auf dem Objektträger so bewegt wird, dass seine Oberfläche wie ein Film auf dem Objektträger haften bleibt.

J. C. Debongnie et al. kommen diesem Ziel am nächsten; sie beschreiben in "The American Journal of Gastroenterology", Vol. 87, No. 1, January 1992,Seite 21, bzw. in "Arch Pathol Lab Med", Vol 118, November 1994, Seite 1115, eine einfache Rollbewegung des Schleimhautteilchens auf dem Objektträger. Sie erzielen hierdurch vorwiegend eine Darstellung der lockeren Schleimhautteilchen, die beim Abrollen haften bleiben. Das Ziel dieser Technik war die Darstellung der vorwiegend im Schleim lebenden Helicobacter pylori.

EP-A-1 067 374 beschreibt ein Verfahren und eine Vorrichtung zur Mikro-Dissektion von in Form eines flächigen Gewebeschnitts auf ' einem Trager fixierten Gewebe mit einer feinen Nadel, die in einer bezüglich der drei Raumachsen verfahrbaren Aufnahme angeordnet ist und deren Spitze mit der Aufnahme relativ zu dem zu trennenden Gewebe bewegbar ist, wobei dass die Nadel (18) mit einem Schwingantrieb (20) gekoppelt ist, der die Nadel in longitudinale und/oder transversale Schwingungen mit vorwählbarer Amplitude und Frequenz versetzt.

Die Erfindung hat zur Aufgabe, das gattungsgemäße Verfahren dahingehend zu verbessern und zu optimieren, dass die auf dem Objektträger haftende Schichtdicke im Hinblick auf die darzustellenden Teilchen variiert werden kann. Das Ziel dieser Technik ist ferner die Darstellung möglichst aller in der Schleimhaut vorhandenen zellulären und faserigen Strukturen. Hierbei sollen sich die Zellen möglichst unbeschädigt im Zellverband in einer Ebene nebeneinanderliegend darstellen zusammen mit den zellulären und faserigen Strukturen der Schleimhaut. In gleicher Weise sollen aber auch körperfremde Zellen wie Sprosspilze mit ihrem Pseudomycel und die Helicobacter pylori zur Darstellung gebracht werden, um so die Beziehung der einzelnen Zellstrukturen zueinander studieren zu können.

Diese Aufgabe wird bei dem gattungsgemäßen Verfahren mit den im Kennzeichen von Patentanspruch 1 genannten Verfahrensschritten gelöst. Der hierauf bezogene Unteranspruch 2 beinhaltet eine zweckmäßige und vorteilhafte Ausgestaltung dieser Lösung.

Die erfindungsgemäße Aufbereitungsmethode ermöglicht insbesondere bei der Schleimhautuntersuchung des Magen-Darm-Trakts oder auch der Atemwege eine eindeutige Aussage über den Zustand der oberflächlichen Schleim-Epithel-Schicht, in der sich bevorzugt die krankheitserregenden Keime der Schleimhäute aufhalten.

Nach dieser Aufbereitung werden die auf dem Objektträger haftenden Filmstreifen in bekannter Weise fixiert, luftgetrocknet und eingefärbt. Sollen sie für Dauer haltbar sein, werden sie mit Entellan unter einem Deckglas verschlossen.

Für die Durchführung dieser Technik gibt es
1.) 3 Variable, die durch den Untersucher bestimmt werden:
   a) der Winkel der Nadel zur Glasoberfläche,
   b) der Abstand der Gewebsprobe (Biopsie) zur Nadelspitze,
   c) das Gleichmass des Führens der Nadel auf der Glasoberfläche.
2.) 3 Varianten, die durch das Material vorgegeben sind:
   a) die Grösse des Gewebeteilchens,
   b) die Viskosität des Schleimbelages des Gewebeteilchens,
   c) die Haftfähigkeit der Glasoberfläche des Objektträgers.

Mit den 3 Variablen hat der Untersucher die Möglichkeit, die durch das Material bedingten 3 Varianten auszugleichen, um so eine optimale Qualität der Menge und Dicke der Zellverbände in dem haftenden Film zu erzielen.

Um eine optimale Qualität zu erzielen, geht man in der Weise vor:

Man verringert bei sonst konstanten Bedingungen den Winkel der Nadel zur Glasfläche , bis die Nadel auf die Mitte des Gewebeteilchens trifft. Die Nadel schiebt das Gewebeteilchen vor sich her. Es gibt nur eine Kraftkomponente in Richtung der Bewegung. Die Kraftkomponente zur Glasfläche ist angenähert null.

Folge: Bei einer Schleimviskosität mit normalen Haftungseigenschaften wird das Gewebeteilchen über das Glas geschoben bzw. gerollt. Die Kraftkomponente in Bewegungsrichtung ist maximal, die Druckwirkung auf die Glasfläche minimal.

Zu 1a) Mit leichtem Anheben der Nadel wird der Winkel der Nadel zur Glasfläche stumpfer. Bei gleichem Abstand des Gewebeteilchens von der Nadelspitze trifft die Nadel das Schleimhautteilchen nicht mehr auf die Mitte, sondern etwas oberhalb der Mitte des Partikels. Hierdurch vergrößert sich die Druckkomponente zur Glasfläche hin. Das Gewebeteilchen wird hierdurch leicht an die Glasfläche gepresst.

Folge: Die Komponente der Schiebekraft verringert sich; die Druckwirkung des Gewebeteilchens zur Glasfläche hin und somit die Haftung an der Glasfläche verstärkt sich. Ein ähnlicher Effekt lässt sich erzielen, wenn man den Winkel der Nadel zur Glasfläche konstant hält und den Abstand des Gewebeteilchens von der Nadelspitze vergrößert.

Zu 1b) Der Abstand der Gewebsprobe zur Nadelspitze richtet sich nach der Größe der jeweiligen Gewebeteilchen, um bei unterschiedlicher Größe der Teilchen die gleiche rollende bzw. schiebende Kraft-Komponente zum Objektträger zu erhalten.

Zu 1c) Bei gleichmäßiger Führung der Nadel über die Glasfläche erhält man einen gleichmäßigen Film auf der Glasfläche. Wünscht man einen unterschiedlichen Film auf dem Objektträger, etwa bei Material mit unterschiedlicher Konsistenz, so wählt man einen größeren Abstand des Gewebeteilchens von der Nadelspitze und variiert den Winkel der Nadel zum Objektträger mehrfach beim Schieben des Gewebeteilchens über die Glasfläche. Hierdurch übt man eine stets wechselnde Kraftkomponente auf das Gewebeteilchen aus , mit der das Gewebeteilchen beim Schieben auf die Glasfläche gepresst wird. Hierdurch erhält der Film eine unterschiedliche Beschaffenheit in Bezug auf seine Dicke und in Bezug auf den Anteil an Elementen, die im Schleimhautpartikel stärker verhaftet sind.

Solche Varianten sind deswegen notwendig; weil die Gewebsproben unterschiedliche Größe und Konsistenz haben mit einem unterschiedlich viskosen Schleimbelag. Auch hat die Glasoberfläche der einzelnen Objektträger unterschiedliche Haftungseigenschaft. Mit etwas Erfahrung findet man die für die jeweilige Probe geeignete Variante schnell heraus. Man erkennt dies an der Beschaffenheit des Films auf dem Objektträger. Hält man den Objektträger gegen das Licht, dass die Glasfläche das Licht spiegelt, so sieht man bereits beim Anfertigen, ob genügend Material am Objektträger haften bleibt. Man kann sofort korrigieren, um die gewünschte Gewebsdichte auf dem Objektträger zu erhalten.

### Nutzen der Methode:

Mittels dieser Methode lassen sich unterschiedlich dicke Beläge mit unterschiedlich großen Zellverbänden und unterschiedlichen zellulären oder faserigen Strukturen als Film auf dem Objektträger darstellen, was für unterschiedliche Gewebsproben oder für unterschiedliche Untersuchungszwecke von Bedeutung sein kann. Indem man die Kraftkomponente zum Objektträger hin auf das zu untersuchende Schleim-hautmaterial abstimmt, gewinnt man Präparate, in welchen die Zellen im natürlichen Zellverband zusammen mit den hier lebenden zellulären, aber auch Faser- und Pseudomycel bildenden Mikroorganismen wie Candidasprosspilzen zur Darstellung kommen. Dies ergibt eine außerordentlich klare Bilddokumentation und ermöglicht das Studium der physiologischen Lebensbedingungen an der Schleimhautoberfläche insbesondere des Magen-Darm-Traktes und der Atemwege.

Die Erfindung wird im folgenden anhand der Zeichnungen erläutert:
Die Figur 1 veranschaulicht in vergrößertem Maßstab das verfahrensgemäße Vorgehen;
die Figuren 2a und 2b zeigen Mikroskop-Aufnahmen von Epithelzellen, die gemäß dem erfindungsgemäßen Verfahren aufbereitet wurden.

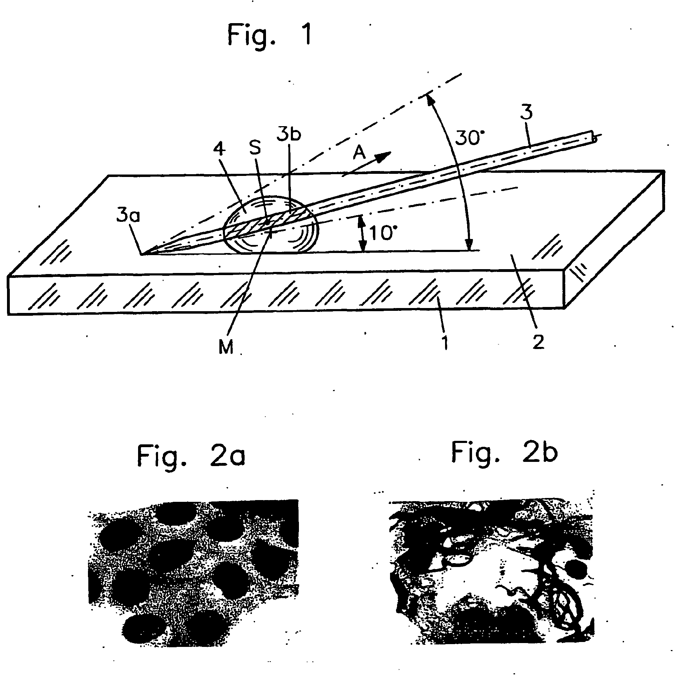

Die Figur 1 zeigt schematisch und in vergrößertem Maßstab einen Objektträger 1 aus einer Glasplatte mit geschliffen-polierter Oberfläche 2, auf der eine dünne, elastische Nadel 3 aufgesetzt ist und auf der ein etwa stecknadelkopfgroßes Schleimhautteilchen 4 aufliegt.

Die Nadel 3 wird gegenüber der Oberfläche 2 in einem Winkel von 10° bis 30°, in dem gezeichneten Beispiel von ca. 16°, gehalten. Dabei wird der Abstand des Schleimhautteilchens 4 von der Nadelspitze 3a so gewählt, dass der Schwerpunkt S der schraffiert dargestellten Kontaktfläche 3b der Nadel 3 mit dem Schleimhautteilchen 4 auf den oder oberhalb von dessen Mittelpunkt M zu liegen kommt. Nun wird das Schleimhautteilchen 4 mit der Nadel 3 in Pfeilrichtung A, also senkrecht zur Zeichenebene, unter Einhalten des Winkels von ca. 16° über die Oberfläche 2 des Objektträgers 1 geschoben. Zur Ausbildung mehrerer, nebeneinander liegender Filmstreifen des Schleimhautteilchens kann die Nadel 3 mehrfach mäanderförmig über die Oberfläche 2 des Objektträgers 1 geführt werden.

Diese Vorgehensweise bewirkt eine "Roll-Schiebe-Bewegung", wodurch nicht nur die oberflächlichen Zellelemente des Schleimhautpartikels zur Haftung kommen wie bei einfacher Rollbewegung, sondern auch die oberflächlichen zellulären und faserigen Strukturen, die im Gewebeteilchen stärker verankert sind.

Der Angriffspunkt S des Nadelschaftes an dem Schleimhautteilchen 4 kann während der "Schiebe-Roll- Bewegung" verändert werden; er liegt aber in jedem Falle auf oder etwas oberhalb des Teilchenmittelpunkts M.

In Figur 2a kommen die Epithelzellen der Schleimhautoberfläche als Zellverband zur Darstellung. Man erkennt den Zellkern, den Zellleib und die Zellwände, die die einzelnen Zellen voneinander abgrenzen (Magenschleimhaut).

In Figur 2b sind zellige und faserige Elemente der Schleimhaut dargestellt. Am unteren Bildrand erkennt man die Konturen von zwei Epithelzellen der Schleimhaut. Am rechten Bildrand sieht man zwei Sprosszellen. Oben und seitwärts ranken sich CandidaPseudomycel-Fasern (Magenschleimhaut).

## Patentansprüche

1. Verfahren zur Aufbereitung von durch Biopsie entnommener Schleimhautteilchen für die zytologische Diagnostik, bei dem ein von der Schleimhaut entferntes Schleimhautteilchen auf einen Objektträger übertragen und zur Ausbildung eines Films mit einer Nadel über den.Objektträger bewegt wird, **gekennzeichnet durch** folgende Schritte:
a) die Nadel (3) wird in einem Winkel von 10° bis 30° bezüglich der Oberfläche (2) des Objektträgers (1) gehalten und mit ihrer Spitze (3a) mit Abstand von dem Schleimhautteilchen (4) auf die Oberfläche (2) des Objektträgers gelegt;
b) dabei wird der Abstand des Schleimhautteilchens(4) von der Nadelspitze (3a) so gewählt, dass der Schwerpunkt (S) der Kontaktfläche (3b) der Nadel (3) mit dem Schleimhautteilchen (4) auf den Mittelpunkt (M) oder etwas oberhalb des Mittelpunkts (M) des Schleimhautteilchens (4) zu liegen kommt;
c) darauf wird das Schleimhautteilchen (4) mit der Nadel unter Einhalten des Winkels von 10° bis 30° über den Objektträger (1) geschoben.

2. Verfahren nach Anspruch 1, **dadurch gekennzeichnet, dass** das Schleimhautteilchen zur Ausbildung mehrerer, nebeneinander liegender Filmstreifen mehrfach mäanderförmig mit der Nadel über die Oberfläche des Objektträgers bewegt wird.

## Revendications

1. Procédé pour la préparation de particules de muqueuses prélevé par biopsie pour le diagnostic cytologique; le particule de muqueuses prélevé est transféré sur une lame et étalé avec une aiguille afin de former un film.
Ce procédé est **caractérisé par** les mesures suivantes:
a) l'aiguille (3) est tenue avec un angle de 10° à 30° par rapport à la surface (2) de la lame (1) en décalant latéralement la pointe (3a) de l'aiguille (3) par rapport au particule de muqueuse (4) sur la surface (2) de la lame (1);
b) à ce propos, la distance entre le particule de muqueuse (4) et la pointe (3a) de l'aiguille (3) est choisie de manière á ce que le centre de gravité (S) de la surface de contact (3b) de l'aiguille (3) avec le particule de muqueuse (4) soit disposé au centre (M) ou légèrement au-dessus du centre (M) du particule de muqueuse (4);
c) après cela, le particule de muqueuse (4) est poussé avec l'aiguille (3) sur la lame (1) en gardant l'angle de 10° à 30°.

2. Procédé selon la revendication 1, **caractérisé par** ce que le particule de muqueuse est déplacé sur la surface (2) de la lame (1) plusieurs fois, afin de former plusieurs raies côte à côte, tellement développant une dessin méandriforme.

## Claims

1. Process for the preparation of mucous membrane particles taken by biopsy for the cytological diagnosis wherein a mucous membrane particle removed from the mucous membrane is transferred to an object slide and, for the formation of a film, is moved by a needle over the object slide,
**characterized by** the following steps:
a) the needle (3) is held at an angle of 10° to 30° with respect to the surface (2) of the object slide (1) and is placed with its tip (3a) onto the surface (2) of the object slide (1) at a distance from the mucous membrane particle (4);
b) wherein the distance of the mucous membrane particle (4) from the needle tip (3a) is so selected that the centre of gravity (S) of the contact area (3b) of the needle (3) with the mucous membrane particle (4) is disposed at the centre point (M) or somewhat above the centre point (M) of the mucous membrane particle (4);
c) then, the mucous membrane particle (4) is pushed by the needle (3) over the object slide (1) while maintaining the angle of 10° to 30°.

2. Process according to claim 1, **characterized in that** the mucous membrane particle is moved by the needle over the surface of the object slide several times so as to form several film streaks side by side in a meander-like pattern.
